# EUROPÄISCHE PATENTSCHRIFT

(11) **EP 1 931 896 B1**
(45) Veröffentlichungstag und Bekanntmachung des Hinweises auf die Patenterteilung: **24.03.2010**
(21) Anmeldenummer: 06778228.4
(22) Anmeldetag: 11.08.2006
(51) Int. Cl.: F16H 57/12

(54) **GETRIEBE-ANTRIEBSEINHEIT MIT AXIALSPIELAUSGLEICH**
AXIAL BACKLASH-ADJUSTED TRANSMISSION DRIVE UNIT
UNITE DE TRANSMISSION ET D'ENTRAINEMENT A COMPENSATION DU JEU AXIAL

(30) Priorität: 26.09.2005 DE 102005045919
(43) Veröffentlichungstag der Anmeldung: 18.06.2008
(73) Patentinhaber: ROBERT BOSCH GMBH, 70442 Stuttgart (DE)
(72) Erfinder: OBERLE, Hans-Juergen, 76437 Rastatt (DE); SCHWENDEMANN, Franz, 77833 Ottersweier (DE)
(86) Internationale Anmeldenummer: PCT/EP2006/065248
(87) Internationale Veröffentlichungsnummer: WO 2007/036385

(56) Entgegenhaltungen:
- EP-A- 0 563 583
- WO-A2-97/43564
- DE-A1- 10 053 183
- DE-U1- 9 313 949
- GB-A- 2 356 910
- JP-A- 11 094 053
- US-A- 5 169 245

## Beschreibung

### Stand der Technik

Die vorliegende Erfindung betrifft eine Getriebe-Antriebseinheit mit einem Axialspielausgleich für ein Axialspiel einer Welle.

Zur Vermeidung oder zur Einstellung eines Axialspiels von Wellen in Verstellmotoren oder Getrieben, wie z.B. Spindelgetrieben, können die im Betrieb auftretenden Axialkräfte zu einem Spiel der Welle führen. Dieses Spiel sollte jedoch möglichst unterbunden werden, wobei vorzugsweise eine Axialspieleinstellung derart ausgelegt ist, dass sie auch bei Verschleiß über die Lebensdauer des Bauteils bereitsteht. Aus der DE 101 14 453 A1 ist beispielsweise eine Getriebe-Antriebseinheit bekannt, bei welcher ein Axialspielausgleich einer Welle durch ein Dämpfungsmittel erreicht wird, welches am Außenumfang eines topfförmigen Hülsenelements angeordnet ist. Das Ende der Welle ist dabei im topfförmigen Hülsenelement positioniert.

Andere bekannte Möglichkeiten zum Ausgleich des Axialspiels sind beispielsweise das Vorsehen einer Einstellschraube, welche koaxial zur Welle angeordnet ist und so lange verstellt werden kann, bis die Welle kein axiales Spiel mehr aufweist. Ferner ist bekannt, zwischen ein Ende der Welle und einem Abstützbauteil Ausgleichsscheiben anzuordnen, wobei die Ausgleichsscheiben je nach dem vorhandenen Axialspiel der Welle aus einer Vielzahl von Ausgleichsscheiben mit unterschiedlicher Dicke ausgewählt wird. Hierbei muss jedoch eine große Anzahl unterschiedlicher Ausgleichsscheiben vorgehalten werden.

Mit der WO 97/43564 A2 ist ein elektromotorischer Antrieb bekannt geworden, bei der das Längsspiel einer Ankerwelle mittels eines Dämpfgummis ausgeglichen wird. Die Axialrichtung des Dämpfgummis verläuft hier parallel zur Ankerlängsrichtung, wodurch das Ankerlängsspiel durch eine axial Vorspannung des Dämpfgummis ausgeglichen wird.

Die GB-A-2356910 zeigt eine gattungsgemäße Getriebe-Antriebseinheit, bei der das Axiallängsspiel der Ankerwelle eliminiert wird. Das zylindrisch ausgebildete Dämpfelement wird hier ebenfalls axial vorgespannt, um das Längsspiel auszugleichen, wobei die Längsachse des Dämpfelementes parallel zur Längsachse der Ankerwelle angeordnet ist.

### Vorteile der Erfindung

Die erfindungsgemäße Getriebe-Antriebseinheit mit den Merkmalen des Patentanspruchs 1 weist demgegenüber den Vorteil auf, dass sie einen selbsteinstellenden Axialspielausgleich bereitstellen kann. Der Ausgleich des Axialspiels der Welle kann dabei sowohl im Neuzustand als auch bei einem nutzungsbedingten Verschleiß über die gesamte Lebensdauer der Getriebe-Antriebseinheit sichergestellt werden. Somit muss erfindungsgemäß keine Vielzahl von unterschiedlich dicken Ausgleichsscheiben vorgehalten werden und auf aufwendige Messvorgänge des Axialspiels zur Auswahl der richtigen Ausgleichsscheibe kann verzichtet werden. Dies wird erfindungsgemäß dadurch erreicht, dass ein Ausgleichselement zum Ausgleich eines Axialspiels vorgesehen ist, welches zwischen der Anlaufschiene und einem Abstützbauteil, z.B. einem Gehäuseteil, angeordnet ist, wobei das Ausgleichselement eine im Wesentlichen zylindrische Form aufweist und in Radialrichtung aufweitbar ist. Somit kann das Ausgleichselement in Radialrichtung eine Vorspannkraft auf die Ankerwelle ausüben. Das im Wesentlichen zylindrische Ausgleichselement ist somit derart zwischen der Welle und einem Gehäusebauteil angeordnet, dass die Axialrichtung der Welle senkrecht zur Axialrichtung des im Wesentlichen zylindrischen Ausgleichselements ist.

Die Unteransprüche zeigen bevorzugte Weiterbildungen der Erfindung.

Vorzugsweise ist eine Nachstellkraft des Ausgleichselements senkrecht zu einer Axialrichtung der Welle bzw. zu einer Axialkraft, welche auf die Welle wirkt. Dadurch wird eine gegenseitige Beeinflussung der auf die Welle wirkenden Axialkraft einerseits und der Nachstellkraft des Ausgleichselements andererseits vermieden, so dass ein Abheben der Welle durch die Nachstellkraft des Ausgleichselements, z.B. bei fehlender auf die Welle wirkender Axialkraft, verhindert wird.

Besonders bevorzugt ist das Ausgleichselement eine Spirale. Die Spirale ist vorzugsweise aus einem Metallmaterial hergestellt und kann zum Spannen radial zusammengezogen werden. Beim Spannen der Spirale wird dabei insbesondere ein Außendurchmesser reduziert, so dass eine besonders einfache und leichte Montage möglich ist. Wenn die Spirale montiert ist, kann die gespannte Spirale einfach freigegeben werden und aufgrund ihrer Eigenelastizität versucht die Spirale wieder, in ihren entspannten Ausgangszustand zu kommen, wobei sich ihr Außendurchmesser wieder vergrößert. Dadurch wird auf einfache Weise ein selbsteinstellender Axialspielausgleich mittels der Spirale ermöglicht.

Gemäß einer bevorzugten Ausgestaltung der Erfindung ist die Spirale aus einem Flachmetallband gebildet und weist wenigstens zwei Windungen auf. Die Windungen sind dabei derart ausgelegt, dass sie sich gegenseitig kontaktieren. Dadurch wirkt zwischen den einzelnen Windungen eine Reibung, wodurch eine größere Radialkraft der Spirale bereitgestellt werden kann.

Um eine richtige Positionierung der Spirale sicherzustellen, umfasst die Spirale vorzugsweise einen nach außen vorstehenden Positionierungsbereich, welcher sich am Abstützbauteil o.Ä. abstützt. Der Positionierungsbereich der Spirale ist vorzugsweise in einer Ausnehmung im Abstützbauteil angeordnet oder stützt sich an einem am Abstützbauteil gebildeten Absatz ab.

Gemäß einer anderen bevorzugten Ausgestaltung der Erfindung ist das Ausgleichselement eine Spiralfeder aus Federdraht. Diese kann besonders einfach und kostengünstig bereitgestellt werden.

Weiter bevorzugt ist ein Anschlagelement mit einer Anschlagfläche vorgesehen, wobei das Anschlagelement an einer zur Welle gerichteten Seite des Ausgleichselements angeordnet ist. Die Anschlagfläche ist dabei in einem Winkel ungleich 90° zu einer Mittelachse der Welle angeordnet.

Vorzugsweise ist das Ausgleichselement eine aus einem Federdraht hergestellte Zylinderfeder.

Weiter bevorzugt ist zwischen einem Ende der Welle und dem Ausgleichselement eine Anlaufscheibe angeordnet. Erfindungsgemäß kann hierbei durch die Verwendung des Ausgleichselements eine Anlaufscheibe mit einer vorbestimmten Dicke verwendet werden, ohne dass eine Vielzahl unterschiedlicher Anlaufscheiben vorgehalten werden muss, dass das Ausgleichselement ein eventuell vorhandes Axialspiel ausgleicht.

Die erfindungsgemäße Getriebe-Antriebseinheit ist vorzugsweise eine elektrische Maschine mit einem an der Ankerwelle unmittelbar angeordneten Getriebeteil, z.B. einem Schneckengetriebe. Die elektrische Maschine ist vorzugsweise als Elektromotor ausgebildet und wird bevorzugt in Komfortantrieben von Fahrzeugen, wie z.B. elektrischen Fensterhebern, elektrischen Schiebedächern, elektrischen Sitzverstellungen usw. verwendet.

### Zeichnung

Nachfolgend werden unter Bezugnahme auf die begleitende Zeichnung Ausführungsbeispiele der Erfindung im Detail beschrieben. In der Zeichnung ist:
- Figur 1: eine schematische Draufsicht einer Getriebe- Antriebseinheit gemäß einem ersten Ausführungsbeispiel während der Montage,
- Figur 2: eine schematische Schnittansicht entlang der Linie A-A von Figur 1,
- Figur 3: eine schematische Draufsicht der Getriebe- Antriebseinheit von Figur 1 im montierten Zustand,
- Figur 4: eine schematische Schnittansicht entlang der Linie B-B von Figur 3,
- Figur 5: eine schematische Draufsicht der Getriebe- Antriebseinheit von Figur 1 bei auftretendem Verschleiß,
- Figur 6: eine schematische Schnittansicht entlang der Linie C-C von Figur 5,
- Figur 7: eine schematische Draufsicht einer Getriebe- Antriebseinheit gemäß einem zweiten Ausführungsbeispiel der Erfindung und
- Figur 8: eine Schnittansicht einer Getriebe- Antriebseinheit gemäß einem dritten Ausführungsbeispiel der Erfindung.

### Beschreibung der Ausführungsbeispiele

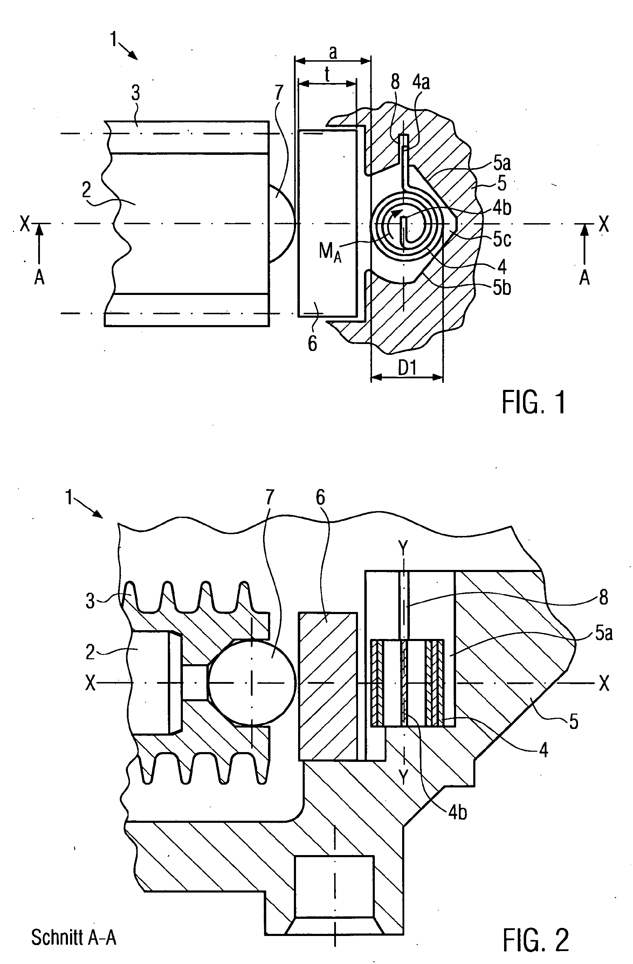

Nachfolgend wird unter Bezugnahme auf die Figuren 1 bis 6 eine Getriebe-Antriebseinheit 1 gemäß einem ersten Ausführungsbeispiel der Erfindung beschrieben.

Die Getriebe-Antriebseinheit 1 umfasst einen Elektromotor mit einer Welle 2 auf welcher ein Schneckengetriebe 3 angeordnet ist. Die Welle 2 ist dabei die Ankerwelle des Elektromotors. Wie insbesondere aus Figur 2 ersichtlich ist, ist am Ende der Welle eine Kugel 7 angeordnet, bzw. ein kugelförmiger Axialanlauf, der z.B. auch als Kuppe ausgebildet sein kann und eine punktförmige Axiallagerung bildet.

Die Welle 2 ist in einem Gehäusebauteil 5 angeordnet. Ferner ist ein Ausgleichselement 4 zum Ausgleich eines Axialspiels der Welle 2 in Axialrichtung X-X der Welle 2 vorgesehen. Das Ausgleichselement 4 ist dabei zwischen einer Anlaufscheibe 6 am Ende der Welle 3, welches in diesem Ausführungsbeispiel durch die Kugel 7 gebildet wird, und dem Gehäusebauteil 5 angeordnet. Das Gehäusebauteil 5 dient als Abstützbauteil für das Ausgleichselement. Wie insbesondere aus Figur 1 ersichtlich ist, ist im Gehäusebauteil 5 eine Ausnehmung 5c mit einer ersten Abstützfläche 5a und einer zweiten Abstützfläche 5b gebildet. Die erste Abstützfläche 5a ist dabei senkrecht zur zweiten Abstützfläche 5b angeordnet.

Das Ausgleichselement 4 ist eine Spirale, welche aus einem Flachmetallband hergestellt ist. Wie aus Figur 1 ersichtlich ist, weist das Ausgleichselement 4 einen nach außen gerichteten Positionierungsbereich 4a und einen nach innen gerichteten Vorspannbereich 4b auf. Der Positionierungsbereich 4a bzw. der Vorspannbereich 4b sind dabei jeweils durch ein Ende des Flachbandmaterials gebildet. Das Ausgleichselement 4 weist im Wesentlichen eine zylindrische Form auf. Das Ausgleichselement 4 ist dabei derart zur Welle 2 angeordnet, dass seine Axialrichtung Y-Y senkrecht zur Axialrichtung X-X der Welle ist (vgl. Figur 2).

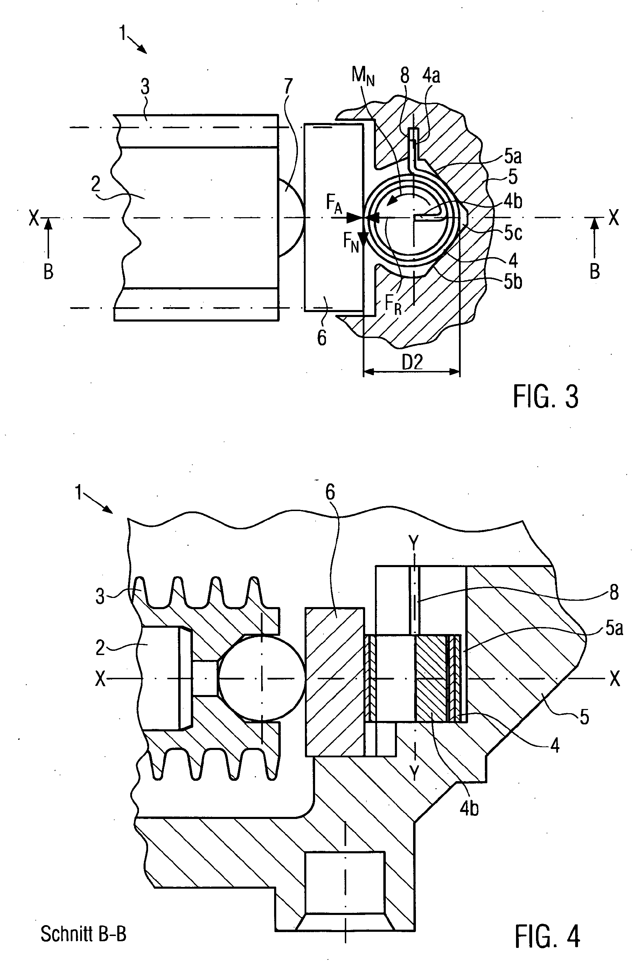

Das Ausgleichselement 4 ist in der Lage, eine Radialkraft F_{R} aufzubringen, welche in Axialrichtung X-X der Welle 2 wirkt (vgl. Figur 3).

Ferner ist zwischen der Kugel 7 und dem Ausgleichselement 4 eine Anlaufscheibe 6 angeordnet, welche im montierten Zustand zwischen dem Ende der Welle 2 und dem Ausgleichselement 4 eingespannt ist. Im Gehäusebauteil 5 ist ferner eine Ausnehmung 8 gebildet, in welcher der Positionierungsbereich 4a des Ausgleichselements 4 angeordnet ist. Die Ausnehmung 8 erleichtert somit einerseits die Montage und stellt andererseits sicher, dass das Ausgleichselement 4 immer richtig positioniert ist.

Figur 1 stellt den Montagezustand des Ausgleichselements dar. Hierzu wird das Ausgleichselement 4 über den Vorspannbereich 4b zusammengerollt und vorgespannt, wobei ein Anzugsdrehmoment M_{A} auf das Ausgleichselement M_{A} ausgeübt wird. Wie aus Figur 1 ersichtlich ist, wird das Anzugsdrehmoment im Uhrzeigersinn ausgeübt. Dadurch wird ein Außendurchmesser des Ausgleichselements 4 von einem Ausgangszustand, in welchem das Ausgleichselement 4 entspannt war, auf den Außendurchmesser D1 reduziert. Das Vorspannen des Ausgleichselements 4 wird vorzugsweise dann ausgeführt, wenn das Ausgleichselement 4 im Gehäuse 5 angeordnet ist, da dann der Positionierungsbereich 4a schon in der Ausnehmung 8 angeordnet ist. Dies erleichtert den Vorgang des Vorspannens des Ausgleichselements. Wenn das Ausgleichselement 4 wie in Figur 1 gezeigt vorgespannt ist, kann dann die Anlaufscheibe 6 einfach zwischen die Welle 2 und das Ausgleichselement 4 eingefügt werden. Es sei angemerkt, dass hinsichtlich des Montagevorgangs selbstverständlich auch zuerst die Anlaufscheibe 6 montiert werden kann, ohne dass das Ausgleichselement 4 montiert ist und das Ausgleichselement 4 dann außerhalb der Getriebe-Antriebseinheit 1 vorgespannt wird, so dass es einen kleinen Außendurchmesser D1 aufweist und dann montiert wird.

Wenn somit alle Bauteile der Getriebe-Antriebseinheit 1 montiert sind, wird die Vorspannung des Ausgleichselements 4 aufgehoben, so dass sich dieses entspannt. Dadurch wird eine Radialkraft F_{R} auf die Anlaufscheibe 6 ausgeübt und die Anlaufscheibe 6 gegen die Kugel 7 der Welle 2 gedrückt (vgl. Figur 4). Hierbei vergrößert sich der Außendurchmesser des Ausgleichselements 4 auf D2, wie in Figur 3 gezeigt. Dadurch übt das Ausgleichselement 4 eine ständig anliegende Vorspannkraft auf die Anlaufscheibe 6 und somit auch auf die Welle 2 aus. Das Ausgleichselement 4 stützt sich dabei an der ersten und zweiten Abstützfläche 5a, 5b des Gehäusebauteils 5 ab. Durch den Entspannvorgang des Ausgleichselements 4 wird ein Normaldrehmoment M_{N} erzeugt, wodurch am Ausgleichselement 4 eine Nachstellkraft F_{N} erzeugt wird. Diese Nachstellkraft F_{N} wirkt tangential am Kontaktpunkt zwischen dem Ausgleichselement 4 und der Anlaufscheibe 6, so dass eine eventuell auf die Welle 2 wirkende Axialkraft F_{A} senkrecht zur Nachstellkraft F_{N} ist (vgl. Figur 3). Dadurch wird insbesondere verhindert, dass aufgrund der Vorspannkraft des Ausgleichselements 4 ein Abheben der Welle 2 bei einer Belastung des Ausgleichselements 4 durch eine Axialkraft F_{A} auftritt. Das im Wesentlichen zylindrische Ausgleichselement 4 ermöglicht weiterhin eine Bauraumoptimierung, da die radiale Vorspannkraft durch eine Rotationsbewegung des Ausgleichselements 4 bereitgestellt wird.

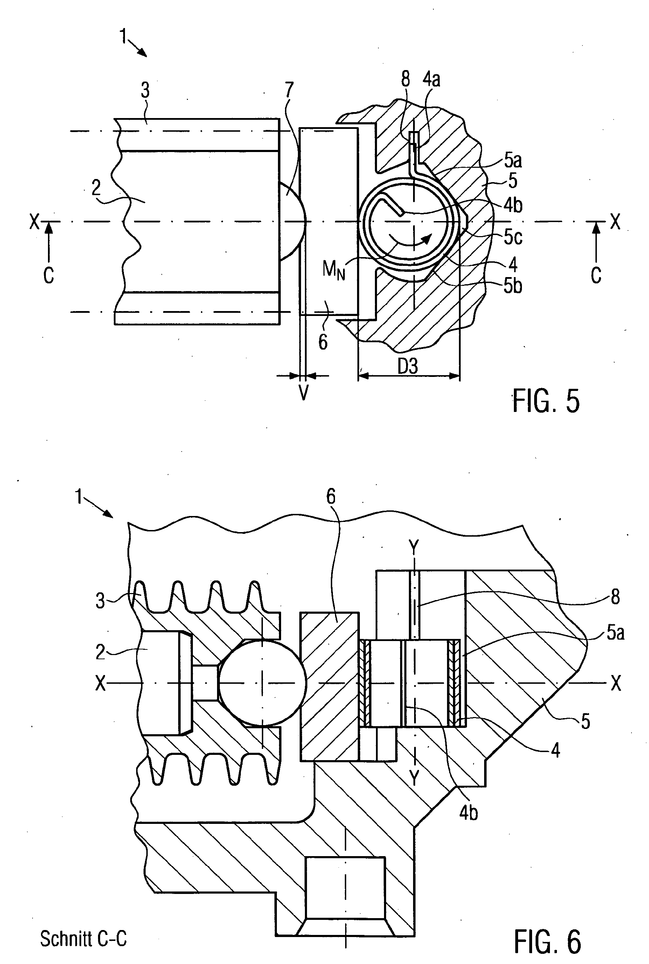

Wenn aufgrund eines längeren Betriebes ein Verschleiß an Bauteilen auftritt, welche insbesondere die axiale Länge der Bauteile betrifft, kann das erfindungsgemäße Ausgleichselement 4 selbständig einen Ausgleich des Axialspiels bereitstellen. In den Figuren 5 und 6 ist beispielhaft ein Verschleiß V an der Anlaufscheibe 6 dargestellt. Ohne das erfindungsgemäße Ausgleichselement 4 würde sich somit ein Axialspiel in Größe des Verschleißes V ergeben. Aufgrund des Verschleißes V führt das Ausgleichselement 4 jedoch eine weitere Rotationsbewegung aus, so dass sich der Außendurchmesser des Ausgleichselements 4 auf D3 erweitert, wobei D3 = D2 + V ist. Dadurch ist kein Spiel zwischen den Bauteilen in Axialrichtung X-X der Welle vorhanden.

Wie aus einem Vergleich der Figuren 1, 3 und 5 ersichtlich ist, wird das Ausgleichselement 4 somit im Uhrzeigersinn vorgespannt und entspannt sich durch Aufweitung seines Durchmessers entgegen des Uhrzeigersinns. Dies ist auch durch die jeweilige Stellung des Vorspannbereichs 4b in den Figuren 1, 3 und 5 ersichtlich. Die Aufweitung des Außendurchmessers des Ausgleichselements stellt dabei immer eine in Axialrichtung X-X wirkende Radialkraft F_{R} bereit, welche für einen Ausgleich eines eventuell durch Verschleiß auftretenden Spiels der Getriebe-Antriebseinheit 1 sorgt.

Da das Ausgangselement 4 aus einem aufgerollten Flachmaterial hergestellt ist, wirkt zwischen den einzelnen sich kontaktierenden Windungen jeweils eine Reibung, so dass in jeder Stellung eine ausreichende Radialkraft F_{R} auf die Welle 2 ausgeübt werden kann.

Um eine sichere Funktion des Ausgleichselements 4 über eine Gesamtlebensdauer der Getriebe-Antriebseinheit sicherzustellen, muss somit lediglich das Ausgleichselement 4 derart vorgespannt werden, dass sowohl im Neuzustand Toleranzen als auch einen eventuell auftretenden maximalen Verschleiß jeweils durch Vergrößerung seines Außendurchmessers ausgleichen kann.

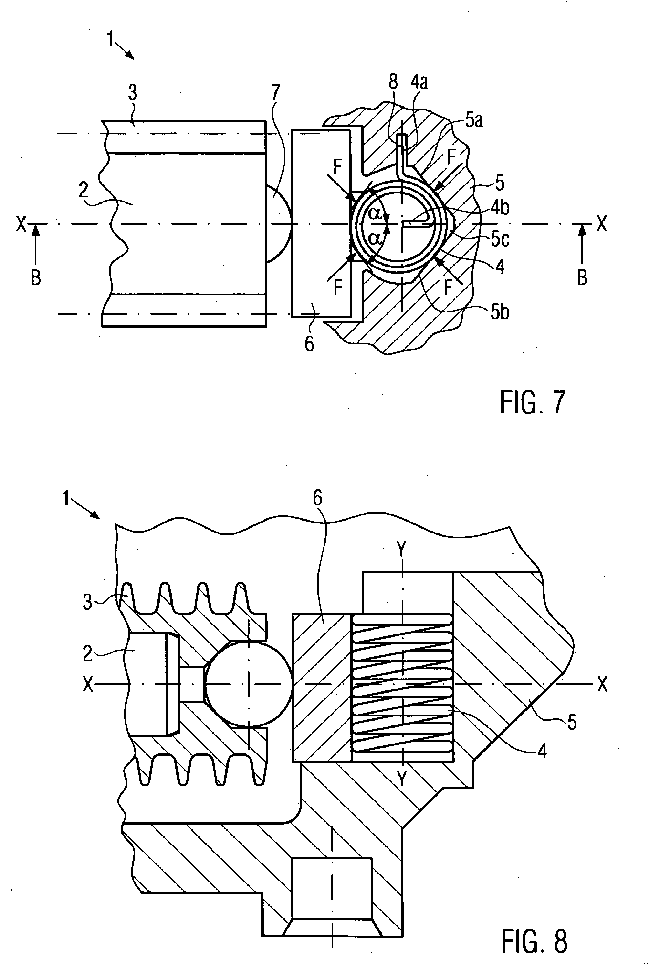

Nachfolgend wird unter Bezugnahme auf Figur 7 eine Getriebe-Antriebseinheit 1 gemäß einem zweiten Ausführungsbeispiel der Erfindung beschrieben, wobei gleiche bzw. funktional gleiche Teile mit den gleichen Bezugszeichen wie im ersten Ausführungsbeispiel bezeichnet sind.

Das zweite Ausführungsbeispiel entspricht im Wesentlichen dem ersten Ausführungsbeispiel, wobei im Unterschied dazu ein Anschlagelement 9 vorgesehen ist. Das Anschlagelement 9 umfasst zwei keilförmige Rampen, welche an der Anlaufscheibe 6 angeordnet sind. Das Anschlagelement 9 weist Anschlagflächen 9a auf, welche in einem Winkel α zur Mittelachse X-X der Welle 2 angeordnet sind. Der Winkel α beträgt dabei ca. 60°. Durch das Vorsehen des Anschlagelements wird die Anzahl der Kraftansatzpunkte, welche in Figur 7 mit den Pfeilen F angedeutet sind, auf vier erhöht. Da das Anschlagelement 9 an der Anlaufscheibe 6 angeordnet ist, muss sichergestellt sein, dass die Anlaufscheibe 6 mit richtiger Orientierung in der Getriebe-Antriebseinheit 1 montiert wird.

Figur 8 zeigt eine Getriebe-Antriebseinheit 1 gemäß einem dritten Ausführungsbeispiel der Erfindung. Gleiche bzw. funktional gleiche Teile sind wieder mit den gleichen Bezugszeichen wie in den vorhergehenden Ausführungsbeispielen bezeichnet.

Im Unterschied zum ersten Ausführungsbeispiel ist beim dritten Ausführungsbeispiel als Ausgleichselement 4 eine Zylinderfeder vorgesehen, welche aus einem Federdraht hergestellt ist. Wie die im ersten Ausführungsbeispiel gezeigte Spirale kann die Zylinderfeder durch Ausüben eines Drehmoments auf den Draht in gewissem Umfang vorgespannt werden, so dass sich ein Außenumfang der Zylinderfeder reduziert. Die Änderung des Außenumfangs hängt dabei insbesondere von der Art des Drahtes, der Anzahl der Windungen, der Steifigkeit des Drahtes, der Dicke des Drahtes usw. ab. Das Ausgleichselement 4 wird wieder mit der Zylinderachse Y-Y senkrecht zur Axialrichtung X-X montiert und im vorgespannten Zustand eingebaut und dann entspannt, so dass eine ständige Radialkraft auf die Anlaufscheibe 6 ausgeübt werden kann. Ansonsten entspricht dieses Ausführungsbeispiel dem ersten Ausführungsbeispiel, so dass auf die dort gegebene Beschreibung verwiesen werden kann.

## Patentansprüche

1. Getriebe-Antriebseinheit, umfassend eine Welle (2) und ein Abstützbauteil (5), **wobei an der Welle (2) ein Getriebebauteil (3) angeordnet ist und** zwischen einem Ende der Welle (2) und dem Abstützbauteil (5) ein Ausgleichselement (4) zum Ausgleich eines Axialspiels der Welle (2) angeordnet ist, **wobei** das Ausgleichselement (4) eine im Wesentlichen zylindrische Form aufweist und im vorgespannten Zustand in Radialrichtung aufweitbar ist, um einen Außendurchmesser zu vergrößern und eine Vorspannkraft (F_{R}) auf die Welle (2) in Axialrichtung (X-X) auszuüben, **dadurch gekennzeichnet, dass** das Ausgleichselement (4) derart zwischen der Welle und einem Gehäusebauteil angeordnet ist, dass die Axialrichtung (X-X) der Welle (2) senkrecht zur Axialrichtung (Y-Y) des Ausgleichselements ist.

2. Getriebe-Antriebseinheit nach Anspruch 1, **dadurch gekennzeichnet, dass** eine Nachstellkraft (F_{N}) des Ausgleichselements (4) senkrecht zur Axialrichtung (X-X) der Welle (2) ist.

3. Getriebe-Antriebseinheit nach Anspruch 1 oder 2, **dadurch gekennzeichnet, dass** das Ausgleichselement (4) eine Spirale ist.

4. Getriebe-Antriebseinheit nach Anspruch 3, **dadurch gekennzeichnet, dass** das als Spirale ausgebildete Ausgleichselement (4) aus einem Flachmetallband oder Federdraht gebildet ist und wenigstens zwei Windungen aufweist.

5. Getriebe-Antriebseinheit nach Anspruch 4, **dadurch gekennzeichnet, dass** sich benachbarte Windungen gegenseitig kontaktieren.

6. Getriebe-Antriebseinheit nach einem der Ansprüche 3 bis 5, **dadurch gekennzeichnet, dass** die Spirale einen nach außen gerichteten Positionierungsbereich (4a) umfasst, welcher sich an dem Abstützbauteil (5) abstützt.

7. Getriebe-Antriebseinheit nach Anspruch 6, **dadurch gekennzeichnet, dass** das Abstützbauteil (5) eine Ausnehmung (8) oder einen Absatz aufweist, an welchem sich der Positionierbereich (4a) des Ausgleichselements (4) abstützt.

8. Getriebe-Antriebseinheit nach Anspruch 1 oder 2, **dadurch gekennzeichnet, dass** das Ausgleichselement (4) eine Zylinderfeder ist.

9. Getriebe-Antriebseinheit nach einem der vorhergehenden Ansprüche, **gekennzeichnet durch** ein Anschlagelement (9) mit einer Anschlagfläche (9a), wobei das Anschlagelement (9) an einer zur Welle (2) gerichteten Seite des Ausgleichselements (4) angeordnet ist und die Anschlagfläche (9a) in einem Winkel (α) zu einer Mittelachse (X-X) der Welle (2) angeordnet ist, wobei der Winkel (α) ungleich 90° ist.

10. Getriebe-Antriebseinheit nach einem der vorhergehenden Ansprüche, **dadurch gekennzeichnet, dass** zwischen einem Ende der Welle (2) und dem Ausgleichselement (4) eine Anlaufscheibe (6) angeordnet ist.

11. Getriebe-Antriebseinheit nach einem der vorhergehenden Ansprüche, **dadurch gekennzeichnet, dass** die Welle (2) eine Ankerwelle eines Elektromotors ist.

## Claims

1. Transmission drive unit, comprising a shaft (2) and a supporting component (5), a transmission component (3) being arranged on the shaft (2), and a compensating element (4) for the compensation of an axial play of the shaft (2) being arranged between one end of the shaft (2) and the supporting component (5), the compensating element (4) having an essentially cylindrical shape and, in the prestressed state, being expandable in the radial direction in order to increase an outside diameter and to exert a prestressing force (F_{R}) upon the shaft (2) in the axial direction (X-X), **characterized in that** the compensating element (4) is arranged between the shaft and a casing component in such a way that the axial direction (X-X) of the shaft (2) is perpendicular to the axial direction (Y-Y) of the compensating element.

2. Transmission drive unit according to Claim 1, **characterized in that** an adjusting force (F_{N}) of the compensating element (4) is perpendicular to the axial direction (X-X) of the shaft (2).

3. Transmission drive unit according to Claim 1 or 2, **characterized in that** the compensating element (4) is a spiral.

4. Transmission drive unit according to Claim 3, **characterized in that** the compensating element (4) designed as a spiral is formed from a flat metal strip or spring wire and has at least two turns.

5. Transmission drive unit according to Claim 4, **characterized in that** mutually adjacent turns contact one another.

6. Transmission drive unit according to one of Claims 3 to 5, **characterized in that** the spiral comprises an outwardly directed positioning region (4a) which is supported on the supporting component (5).

7. Transmission drive unit according to Claim 6, **characterized in that** the supporting component (5) has a recess (8) or a step on which the positioning region (4a) of the compensating element (4) is supported.

8. Transmission drive unit according to Claim 1 or 2, **characterized in that** the compensating element (4) is a cylindrical spring.

9. Transmission drive unit according to one of the preceding claims, **characterized by** a stop element (9) with a stop face (9a), the stop element (9) being arranged on a side of the compensating element (4) which is directed towards the shaft (2), and the stop face (9a) being arranged at an angle (α) to a mid-axis (X-X) of the shaft (2), the angle (α) being unequal to 90.

10. Transmission drive unit according to one of the preceding claims, **characterized in that** a run-on disc (6) is arranged between one end of the shaft (2) and the compensating element (4).

11. Transmission drive unit according to one of the preceding claims, **characterized in that** the shaft (2) is an armature shaft of an electric motor.

## Revendications

1. Unité d'entraînement de transmission, comprenant un arbre (2) et un composant de support (5), un composant de transmission (3) étant disposé sur l'arbre (2) et un élément de compensation (4) pour la compensation du jeu axial de l'arbre (2) étant disposé entre une extrémité de l'arbre (2) et le composant de support (5), l'élément de compensation (4) présentant une forme essentiellement cylindrique et pouvant être écarté dans la direction radiale dans l'état précontraint, afin d'augmenter un diamètre extérieur et d'exercer une force de précontrainte (F_{R}) sur l'arbre (2) dans la direction axiale (X-X), **caractérisée en ce que** l'élément de compensation (4) est disposé entre l'arbre et un composant du boîtier de telle sorte que la direction axiale (X-X) de l'arbre (2) soit perpendiculaire à la direction axiale (Y-Y) de l'élément de compensation.

2. Unité d'entraînement de transmission selon la revendication 1, **caractérisée en ce qu'**une force de rattrapage (F_{N}) de l'élément de compensation (4) est perpendiculaire à la direction axiale (X-X) de l'arbre (2).

3. Unité d'entraînement de transmission selon la revendication 1 ou 2, **caractérisée en ce que** l'élément de compensation (4) est une spirale.

4. Unité d'entraînement de transmission selon la revendication 3, **caractérisée en ce que** l'élément de compensation (4) réalisé sous forme de spirale est formé d'une bande métallique plate ou d'un fil métallique à ressort, et présente au moins deux enroulements.

5. Unité d'entraînement de transmission selon la revendication 4, **caractérisée en ce que** les enroulements adjacents se contactent mutuellement.

6. Unité d'entraînement de transmission selon l'une quelconque des revendications 3 à 5, **caractérisée en ce que** la spirale comprend une région de positionnement (4a) orientée vers l'extérieur, qui s'appuie sur le composant de support (5).

7. Unité d'entraînement de transmission selon la revendication 6, **caractérisée en ce que** le composant de support (5) présente un évidement (8) ou un retrait sur lequel s'appuie la région de positionnement (4a) de l'élément de compensation (4).

8. Unité d'entraînement de transmission selon la revendication 1 ou 2,
**caractérisée en ce que** l'élément de compensation (4) est un ressort cylindrique.

9. Unité d'entraînement de transmission selon l'une quelconque des revendications précédentes, **caractérisée par** un élément de butée (9) avec une surface de butée (9a), l'élément de butée (9) étant disposé sur un côté de l'élément de compensation (4) orienté vers l'arbre (2), et la surface de butée (9a) étant disposée suivant un angle (α) par rapport à un axe médian (X-X) de l'arbre (2), l'angle (α) étant différent de 90°.

10. Unité d'entraînement de transmission selon l'une quelconque des revendications précédentes, **caractérisée en ce que** l'on dispose entre une extrémité de l'arbre (2) et l'élément de compensation (4) un disque de butée (6).

11. Unité d'entraînement de transmission selon l'une quelconque des revendications précédentes, **caractérisée en ce que** l'arbre (2) est un arbre d'induit d'un moteur électrique.
